# EUROPEAN PATENT APPLICATION

(11) **EP 4 053 768 A1**
(43) Date of publication of application: **07.09.2022**
(21) Application number: 20881096.0
(22) Date of filing: 26.10.2020
(51) Int. Cl.: G06Q 10/08

(54) **INVENTORY EVALUATING DEVICE**

(30) Priority: 01.11.2019 JP 2019199665
(71) Applicant: Hitachi Construction Machinery Co., Ltd., Tokyo 110-0015 (JP)
(72) Inventor: URANO Maho, Tokyo 100-8280 (JP); NIWA Yuhei, Tokyo 100-8280 (JP); IINO Tomohito, Tsukuba-shi, Ibaraki 305-0071 (JP); SASAHARA Satoshi, Tokyo 141-8672 (JP)
(74) Representative: MERH-IP Matias Erny Reichl Hoffmann Patentanwälte PartG mbB
(86) International application number: PCT/JP2020/040106
(87) International publication number: WO 2021/085379

(57) **Abstract**

An object of the invention is to provide a technique capable of performing strategic inventory management in consideration of a profitability for each item by calculating an inventory management cost in accordance with an actual state in consideration of an item characteristic, a cost occurrence factor, and the like for each item. An inventory assessment device according to the invention stores relevance data in which a combination of occurrence cause items, which are causes of occurrence of inventory management cost items, is defined for each of the cost items, and calculates a load ratio of the inventory management cost for each of items having the same combination of the occurrence cause items (see FIG. 1).

## Description

### Technical Field

The present invention relates to a technique for formulating a measure for appropriately adjusting inventory.

### Background Art

In an inventory management task, it is important to maintain an inventory so that an item can be shipped steadily in response to an item shipment request, and at the same time, to perform strategic inventory management in consideration of a profitability of each item. For example, it is considered that a high profit item has a large inventory even at a high cost. Alternatively, it is also important to reduce an inventory and control a cost for a low profit item.

The following PTL 1 describes a simulation technique related to inventory management. An object of PTL 1 is "to provide a product commercialization simulation system which can calculate a free cash flow for business for manufacturing a specified product at a plant of a manufacturing enterprise on the basis of direct condition data on the manufacture while taking into consideration sales cost, general management cost, and the like, which are common to the enterprise and the costs of indirect departments", and .PTL 1 describes the product commercialization simulation system provided with "an apportionment total cost calculating unit 4 which calculates the total cost of the manufacturing enterprise through apportionment by direct departments which manufacture the specified product" (see ABSTRACT).

### Citation List

### Patent Literature

PTL 1: JP-A-2003-216801

### Summary of Invention

### Technical Problem

The technique described in PTL 1 calculates the total cost of the manufacturing enterprise through apportionment by the direct departments which manufacture the specified product in order to obtain a profit of the specified product (the apportionment total cost calculating unit 4). Therefore, even when items having different profit rates are mixed in the departments, all the items are calculated as a uniform profit rate, and it is not possible to correctly calculate the profit rate for each item.

In addition, the technique described in PTL 1 distributes a cost (secondary cost) required for a material procurement work to manufacture the specified product according to a personnel who performs the material procurement work, a ratio to a direct material cost, a ratio to a sales, and the like. However, even if the direct material cost and the sales are high, a time spent on the material procurement work is not necessarily high. For example, with regard to an arrival inspection cost, the larger the number of items to be warehoused, the longer an acceptance inspection time, and thus a burden of the arrival inspection cost is large for the item. In addition, for example, if an item is heavy and cannot be handled manually and it is necessary to use a forklift or the like, a cost of the forklift needs to be calculated through apportionment in consideration of a weight of each of the items. However, PTL 1 does not consider an influence of the number of items to be warehoused, the weight, and the like on the cost.

Further, PTL 1 does not consider what kind of measure should be taken to improve the profit for the item determined to have a low profitability. Therefore, even if the technique described in PTL 1 is used, it is difficult to measure the degree of improvement for each measure and a degree of reinforcement (level) and formulate an effective measure for creating a business and an item that can be profitable.

The invention has been made in view of the above problems, and an object of the invention is to provide a technique capable of performing strategic inventory management in consideration of a profitability for each item by calculating an inventory management cost in accordance with an actual state in consideration of an item characteristic, a cost occurrence factor, and the like for each item.

### Solution to Problem

An inventory assessment device according to the invention stores relevance data in which a combination of occurrence cause items, which are causes of occurrence of inventory management cost items, is defined for each of the cost items, and calculates a load ratio of an inventory management cost for each of items having the same combination of the occurrence cause items.

### Advantageous Effect

The inventory assessment device according to the invention can calculate a profitability of each of the items in accordance with an actual state by calculating an inventory management cost in consideration of an item characteristic, a cost occurrence factor, and the like. Therefore, it is possible to formulate an effective measure for inventory optimization. Problems, configurations, and effects other than those described above will be further clarified with the following description of embodiments.

### Brief Description of Drawings

[FIG. 1] FIG. 1 is a functional block diagram of an inventory assessment device 100 and an inventory assessment system 10 according to a first embodiment.
[FIG. 2] FIG. 2 is a sequence diagram when a user sets inventory improvement scenarios, arid the inventory assessment device 100 assesses them to formulate improvement measures.
[FIG. 3] FIG. 3 shows a configuration example of inventory management cost data.
[FIG. 4] FIG. 4 shows a configuration example of item characteristic data 122.
[FIG. 5] FIG. 5 shows a configuration example of gradient distribution data 123.
[FIG. 6] FIG. 6 shows a configuration example of item actual data 124.
[FIG. 7] FIG. 7 shows a configuration example of relevance data of occurrence cause items.
[FIG. 8] FIG. 8 shows a configuration example of item-specific inventory management cost data.
[FIG. 9] FIG. 9 shows a configuration example of index assessment result data.
[FIG. 10] FIG. 10 is a flowchart illustrating a procedure in which the inventory assessment device 100 calculates an index value.
[FIG. 11] FIG. 11 shows a configuration example of a measure content list.
[FIG. 12] FIG. 12 shows a configuration example of scenario setting data.
[FIG. 13] FIG. 13 shows a configuration example of measure relevance data.
[FIG. 14] FIG. 14 shows a configuration example of scenario change rate data.
[FIG. 15] FIG. 15 shows a configuration example of procurement condition data 126.
[FIG. 16] FIG. 16 shows a configuration example of destination data.
[FIG. 17] FIG. 17 shows a configuration example of scenario configuration data.
[FIG. 18] FIG. 18 shows a configuration example of warehousing and shipping forecast data.
[FIG. 19] FIG. 19 shows a configuration example of inventory management cost forecast data.
[FIG. 20] FIG. 20 shows a configuration example of scenario index assessment result data.
[FIG. 21] FIG. 21 is a flowchart illustrating a procedure in which the inventory assessment device 100 calculates an assessment index value of a scenario.
[FIG. 22] FIG. 22 is an example of a screen for displaying a calculation result by an index calculation unit 112.
[FIG. 23] FIG. 23 is an example of a screen for displaying a calculation result by a scenario index calculation unit 117.
[FIG. 24] FIG. 24 is a KPI confirmation screen.
[FIG. 25] FIG. 25 is a sequence diagram when a user sets a target value of an assessment index and the inventory assessment device 100 formulates a scenario for achieving the target value.
[FIG. 26] FIG. 26 shows a configuration example of an assessment index target value.
[FIG. 27] FIG. 27 shows a configuration example of scenario candidate data.
[FIG. 28] FIG. 28 is a flowchart illustrating a procedure in which the inventory assessment device 100 generates a scenario for achieving the target value of the assessment index.
[FIG. 29] FIG. 29 is an example of a screen for displaying a calculation result by the scenario index calculation unit 117.

### Description of Embodiments

### <First Embodiment>

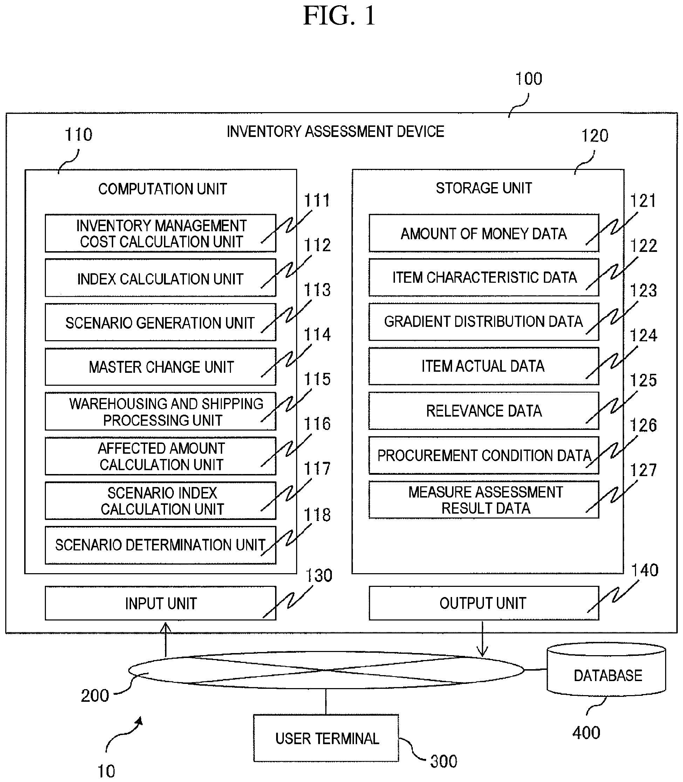

FIG. 1 is a functional block diagram of an inventory assessment device 100 and an inventory assessment system 10 according to a first embodiment of the invention. The inventory assessment system 10 includes the inventory assessment device 100, a user terminal 300 used by an inventory manager, and a database 400. The inventory assessment device 100, the user terminal 300, and the database 400 are connected to each other via a network 200 so as to be able to communicate with each other.

The user terminal 300 is an information processing device such as a personal computer (PC). The inventory manager can use the user terminal 300 to set a plurality of scenarios that are candidates for an inventory management measure. The user terminal 300 transmits the set scenarios to the inventory assessment device 100. The user terminal 300 displays information output by the inventory assessment device 100 on a screen.

The database 400 is, for example, a system such as an enterprise resources planning (ERP) or a database that stores data corresponding to the system. The database 400 can be configured by a storage device for storing data and a computer for transmitting and receiving data.

The network 200 connects the user terminal 300, the database 400, and the inventory assessment device 100 in a communicable manner. The network 200 is usually a communication network managed by a user's organization such as a local area network (LAN). However, the network 200 is not limited to the above communication network, and may be a communication network partially using a public communication network such as the Internet or a general public line such as a wide area network (WAN) or a virtual private network (VPN).

The inventory assessment device 100 is an information processing device such as a PC or a server computer. The inventory assessment device 100 calculates, as indexes for measuring a degree of inventory optimization, (a) a ratio of profit to inventory (= a ratio of operating profit to inventory value) for measuring whether each item is a component that produces profit, and (b) an order fill rate (= a ratio of the number of orders to the order fill number) for measuring a ratio at which the item can be supplied as requested to a customer request. When the ratio of profit to inventory is calculated, an inventory management cost required to calculate a profit for each item is allocated to each item in a form conforming to an actual state. The details of a calculation procedure will be described later.

When an inventory management personnel sets the scenarios which are the candidates of the measure for inventory optimization, the inventory assessment device 100 can assess an effect when these measures are executed for each scenario by using the ratio of profit to inventory and the order fill rate. The inventory management personnel can confirm the result and formulate an effective measure.

The inventory assessment device 100 includes a computation section 110, a storage unit 120, an input unit 130, and an output unit 140.

The computation section 110 includes an inventory management cost calculation unit 111, an index calculation unit 112, a scenario generation unit 113, a master change unit 114, a warehousing and shipping processing unit 115, an affected amount calculation unit 116, a scenario index calculation unit 117, and a scenario determination unit 118. Operations of these functional units will be described below.

The storage unit 120 stores amount of money data 121, item characteristic data 122, gradient distribution data 123, item actual data 124, relevance data 125, procurement condition data 126, and measure assessment result data 127. The storage unit 120 is made of, for example, a storage device such as a hard disk drive or a flash memory device. The details of each data will be described below.

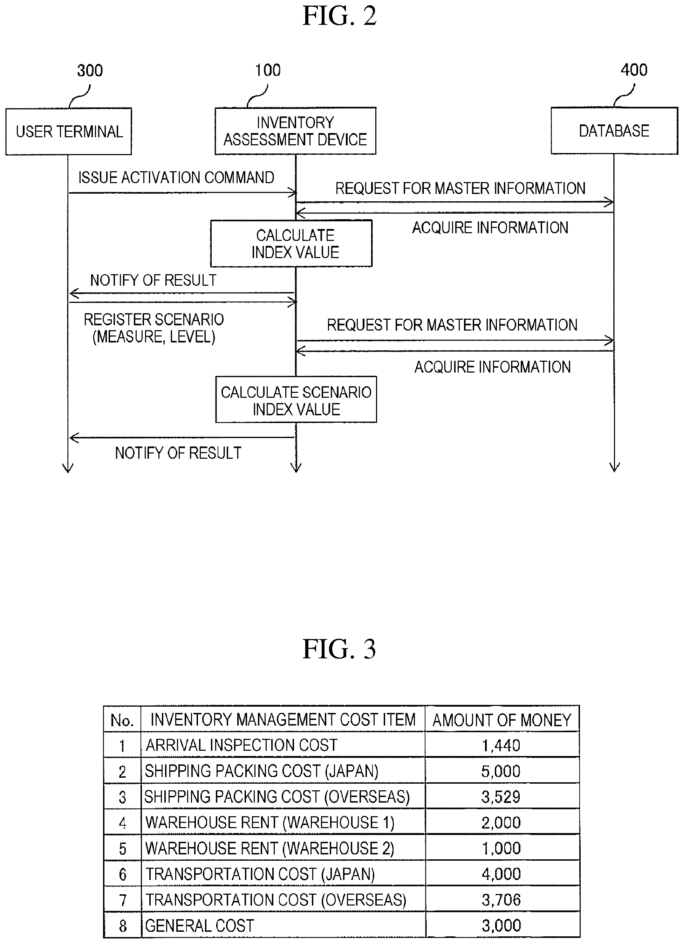

FIG. 2 is a sequence diagram when the user sets inventory improvement scenarios, and the inventory assessment device 100 assesses them to formulate improvement measures. Each sequence of FIG. 2 will be described below.

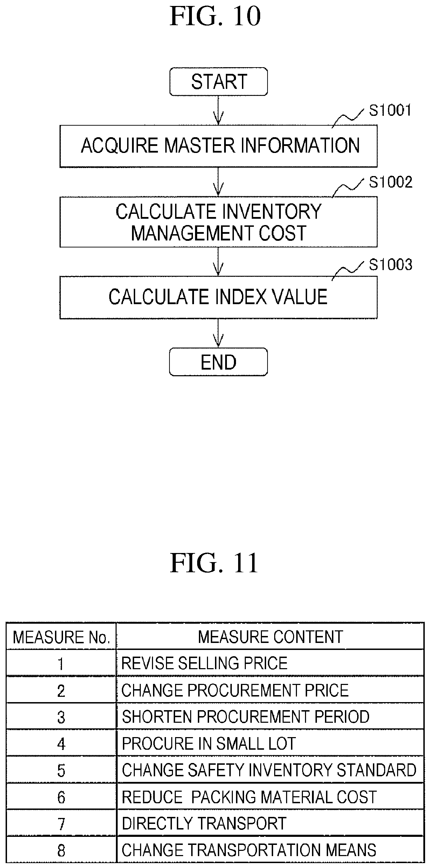

The inventory management personnel instructs the user terminal 300 to start the inventory assessment device 100. The inventory assessment device 100 receives a command and requests the database 400 for master information (five pieces of data from the amount of money data 121 to the relevance data 125 to be described later). The database 400 receives the request and transmits various master information stored in advance to the inventory assessment device 100. The inventory assessment device 100 receives various master information, and the index calculation unit 112 calculates an assessment index to be described later. The inventory assessment device 100 notifies the user terminal 300 of a calculation result of the assessment index, and the inventory management personnel confirms the result on the user terminal 300. The details of the above procedure will be described again with reference to FIG. 10.

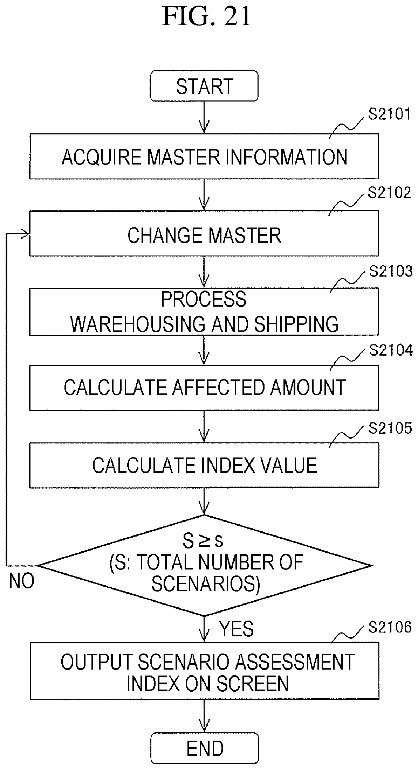

The inventory management personnel uses the user terminal 300 to select one or more combinations of measures and reinforcement levels that are considered necessary for optimizing the inventory, and creates one or more scenarios made of the combinations. The user terminal 300 transmits the created scenarios to the inventory assessment device 100, and the scenario generation unit 113 generates the scenarios accordingly. The inventory assessment device 100 requests the master information (six pieces of data from the amount of money data 121 to the procurement condition data 126 and data for a scenario to be described later) from the database 400. The database 400 receives the request and transmits various master information stored in advance to the inventory assessment device 100. The inventory assessment device 100 receives various master information, and the scenario index calculation unit 117 calculates an assessment index value for each scenario. The inventory assessment device 100 notifies the user terminal 300 of the calculation result of the assessment index. The details of the above procedure will be described again with reference to FIG. 21.

### <Data and Calculation Procedure Used to Calculate Index>

FIG. 3 shows a configuration example of inventory management cost data. The inventory management cost data is configured as a part of the amount of money data 121. The inventory management cost data describes a list of cost items incurred as the inventory management costs and a total amount of each cost item. The inventory management cost data stores, for example, No., an inventory management cost item, an amount of money as data fields.

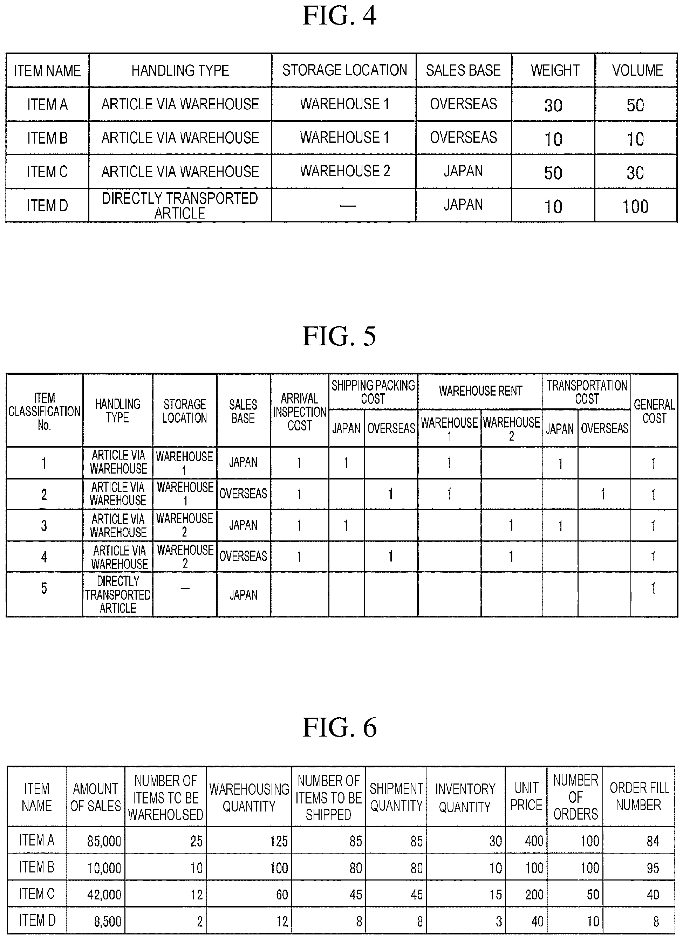

FIG. 4 shows a configuration example of the item characteristic data 122. The item characteristic data 122 is data that describes a type of transportation route as a characteristic for each item. A usage of an item characteristic will be described again in the gradient distribution data 123 to be described later. The item characteristic data 122 stores, for example, an item name, a handling type, a storage location, a sales base, a weight, and a volume as data fields. The handling type is a type for distinguishing whether a procurement item goes through a warehouse or is directly transported from a procurement destination without going through the warehouse. The handling type, the storage location, and the sales base are for determining an item classification used in the gradient distribution data 123 to be described later.

FIG. 5 shows a configuration example of the gradient distribution data 123. The gradient distribution data 123 is a data table for defining how much the inventory management cost is for each item according to an actual operation state. The gradient distribution data 123 stores, for example, an item classification No., a handling type, a storage location, a sales base, an arrival inspection cost, a shipping packing cost, a warehouse rent, a transportation cost, and a general cost as data fields.

A procedure for defining the gradient distribution data 123 will be described. First, the item classification Nos. are prepared for a total number of combinations of the handling type, the storage location, and the sales base such that all the items belong to any item classification No.. Next, for each item classification, a flag indicating only the inventory management cost items that are actually incurred is set up. For example, an item classification No. 2 is a component via the warehouse, and is a component that is stored in a warehouse 1 and sold to a foreign country (overseas). It is considered that the inventory management costs actually incurred for such items are the arrival inspection cost, an export (overseas) portion of the shipping packing cost, a rent of the warehouse 1, and an export (overseas) portion of the transportation cost. Therefore, for the item classification No. 2, a flag "1" is set for these inventory management cost items. For other item classification No., flags are similarly set up. The gradient distribution data 123 can be configured by the above procedure.

FIG. 6 shows a configuration example of the item actual data 124. The item actual data 124 is data that describes an inventory management actual result for each item. The item actual data 124 stores, for example, an item name, an amount of sales, the number of items to be warehoused, warehousing quantity, the number of items to be shipped, shipment quantity, inventory quantity, an unit price, the number of orders, and the order fill number as data fields.

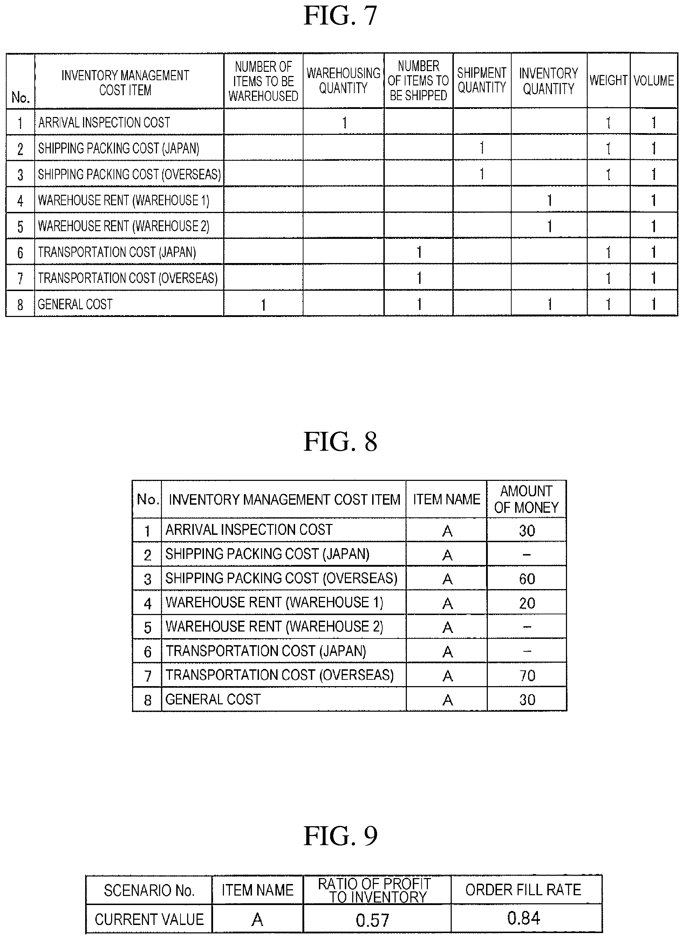

FIG. 7 shows a configuration example of relevance data of occurrence cause items. The relevance data of the occurrence cause items is configured as a part of the relevance data 125. The relevance data of the occurrence cause items stores, for example, No., an inventory management cost item, the number of items to be warehoused, the warehousing quantity, the number of items to be shipped, the shipment quantity, inventory quantity, a weight, and a volume as data fields.

The relevance data of the occurrence cause items is a data table for defining an item that is a cause of occurrence of the inventory management cost for each inventory management cost item. For example, it is considered that an amount of money of the arrival inspection cost is higher as the warehousing quantity is larger and the item is heavier and larger. In this case, when the arrival inspection cost is distributed for each item, it is necessary to consider the warehousing quantity, the weight, and the volume. Therefore, in a record No. 1 of FIG. 7, the flag "1" is set for the warehousing quantity, the weight, and the volume. For other inventory management cost items, flags are similarly set up. By referring to the relevance data of the occurrence cause items, it is possible to specify causes of occurrence that affects the inventory management cost items.

FIG. 8 shows a configuration example of item-specific inventory management cost data. The item-specific inventory management cost data is configured as part of the amount of money data 121. The item-specific inventory management cost data is data that describes a breakdown of the inventory management cost items for each item. The item-specific inventory management cost data stores, for example, No., an inventory management cost item, an item name, and an amount of money as data fields.

FIG. 9 shows a configuration example of index assessment result data. The index assessment result data is configured as a part of the measure assessment result data 127. The index assessment result data is data that stores a calculation result of an assessment index obtained when a scenario to be described later is implemented. The index assessment result data stores a scenario No., an item name, a ratio of profit to inventory, and an order fill rate as data fields. The ratio of profit to inventory indicates a ratio of a profit to an inventory. If the ratio of profit to inventory is 1 or more, it can be said that the item is producing a profit, and thus the ratio of profit to inventory is one index for determining whether the inventory is appropriate.

FIG. 10 is a flowchart illustrating a procedure in which the inventory assessment device 100 calculates an index value. Hereinafter, each step in FIG. 10 will be described in detail.

In step S1001, the inventory assessment device 100 acquires the master information (five pieces of data from the amount of money data 121 to the relevance data 125) from the database 400. In step S1002, the inventory management cost calculation unit 111 calculates the inventory management cost for each item by using the master information acquired in S1001. A specific procedure of S1002 is as follows.

The inventory management cost calculation unit 111 determines to which item classification No. of the gradient distribution data 123 all the items being handled belong in accordance with the item characteristic defined by the item characteristic data 122. For example, according to the item characteristic data 122, since an item A is an item via a warehouse, the storage location is the warehouse 1, and the sales base is other countries (overseas), it can be understood that the item A belongs to the item classification No. 2.

The inventory management cost calculation unit 111 calculates how much a cost ratio should be borne by the item A with respect to the total arrival inspection cost. According to the relevance data (relevance data 125) of the occurrence cause items, it can be seen that the arrival inspection cost of the item A is affected by the warehousing quantity, the weight, and the volume. In addition, in the gradient distribution data 123, it can be seen that the arrival inspection costs are incurred in the item classification Nos. 1 to 4. Therefore, the inventory management cost calculation unit 111 obtains the warehousing quantity × weight × volume for each of all the items corresponding to the item classification Nos. 1 to 4, and obtains a ratio of the warehousing quantity × weight × volume of the item A to the total sum of the items. Therefore, a ratio of an arrival work cost of the item A to a total arrival work cost can be calculated. The inventory management cost calculation unit 111 uses this ratio as an allocation ratio of the arrival inspection cost of the item A. The inventory management cost calculation unit 111 obtains the arrival inspection cost for the item A by multiplying the allocation ratio of the arrival inspection cost for the item A by a total amount of the arrival inspection cost.

The inventory management cost calculation unit 111 calculates each inventory management cost in the item A by using the same method for other inventory management cost items. Each of the inventory management costs can be calculated in the same way for other items. The inventory management cost calculation unit 111 stores the calculation result in the item-specific inventory management cost data (FIG. 8).

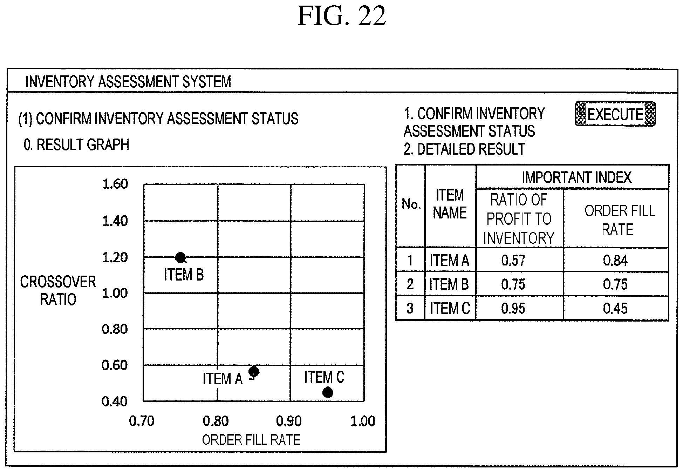

In step S1003, the index calculation unit 112 calculates the ratio of profit to inventory and the order fill rate as assessment indexes from the item actual data 124 and the item-specific inventory management cost data calculated in S1002. The ratio of profit to inventory is the ratio of the profit to the inventory value. For example, if the operating profit is used as the profit, the operating profit for each item can be obtained by subtracting a cost for each item and the inventory management cost for each item from the amount of sales for each item. The inventory value is calculated from the inventory quantity and the unit price. The order fill rate can be calculated by obtaining a ratio of the order fill number (or the number) to the number of orders (or the number). The index calculation unit 112 displays a calculation result on a screen to be described later with reference to FIG. 22.

For example, when the calculation result in step S1003 is the ratio of profit to inventory of 0.57 and the order fill rate of 0.84, the index calculation unit 112 describes the index assessment result data as shown in FIG. 9. According to the example of FIG. 9, since the ratio of profit to inventory of the item A is equal to or less than 1, it is understood that the item A is an item that cannot produce a profit, and some measures have to be taken in order to change the item A to a component that produces a profit. There are various standards for the order fill rate depending on a business form, but the order fill rate is not possible to comply with 16%, and it can be assumed that an order has been lost, and thus improvement is expected.

### <Data and Calculation Procedure Used to Assess Scenario>

FIG. 11 shows a configuration example of a measure content list. The measure content list is a list of measure candidates to be implemented to improve an inventory situation. A scenario to be described later is formed by combining one or more measure contents. The measure content list may be stored in the storage unit 120 in advance, or may be input by the user via the input unit 130. The measure content list stores, for example, a measure No. and a measure content as data fields.

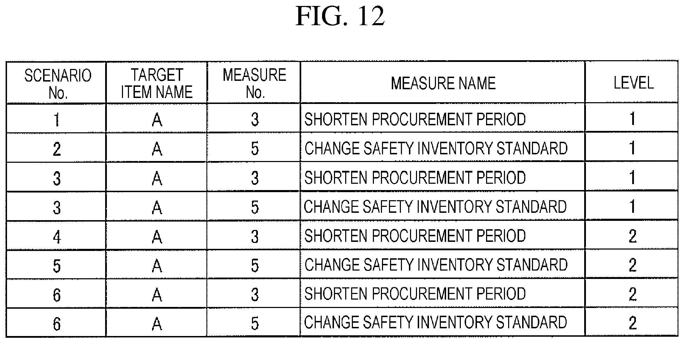

FIG. 12 shows a configuration example of scenario setting data. The user creates the scenario by combining one or more measure contents. The scenario setting data is data that describes the combination content. The scenario setting data can be stored in the storage unit 120. The scenario setting data stores, for example, a scenario No., a target item name, a measure No., a measure name, and a level as data fields. The measure No. refers to the same field in the measure content list.

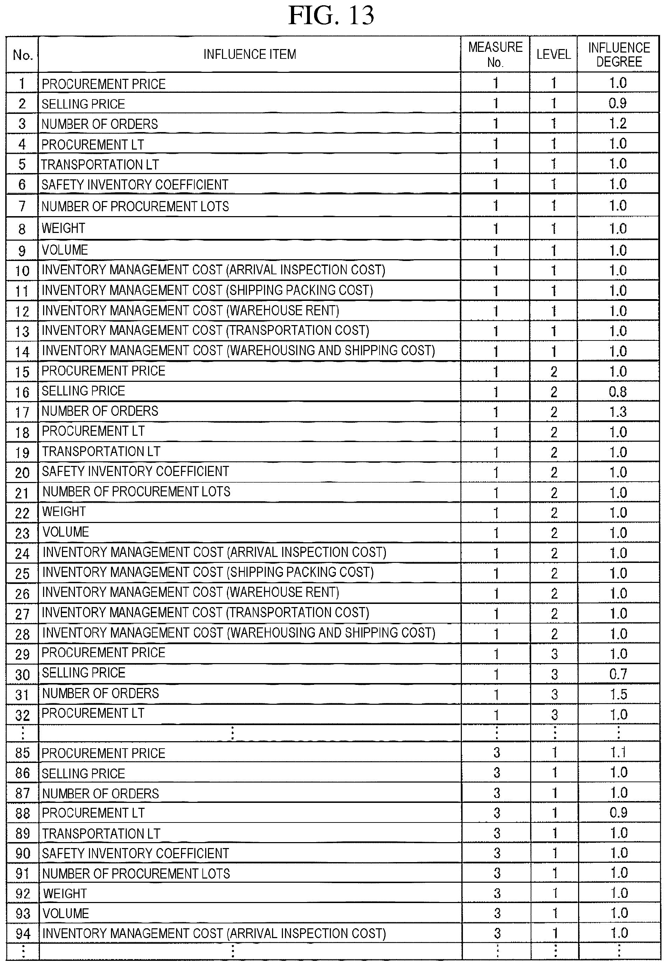

FIG. 13 shows a configuration example of measure relevance data. The measure relevance data is data that defines an influence on the inventory management costs or parameters related to the inventory management costs by implementing the measure contents. The influence can be defined as a variation ratio before and after the measure contents are implemented. Further, when the influences differ depending on an implementation intensity of the measure contents, the influence can be defined for each implementation intensity. In FIG. 13, the implementation intensity is described as a "level". The measure relevance data stores, for example, No., an influence item, a measure No., a level, and an influence degree as data fields. The measure No. refers to the same field in the measure content list. The measure relevance data is configured as part of the relevance data 125.

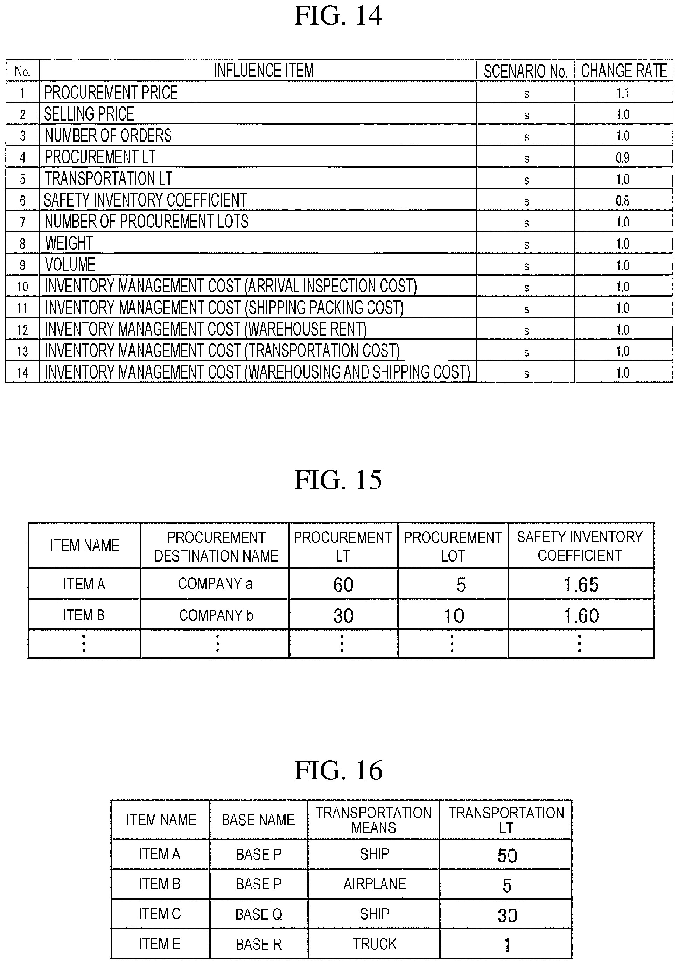

FIG. 14 shows a configuration example of scenario change rate data. The scenario change rate data is data that describes the influence of the measure adopted in each scenario for the scenario in accordance with the measure relevance data. FIG. 14 shows an example for a scenario number "s". The scenario change rate data can be stored in the storage unit 120. The same applies to each data to be described later. The scenario change rate data stores, for example, No., an influence item, a scenario No., and a change rate as data fields.

FIG. 15 shows a configuration example of the procurement condition data 126. The procurement condition data 126 is data that describes constraint conditions such as a lead time when an item is procured for each item. The procurement condition data 126 is used as an implementation condition when the scenario is implemented. The procurement condition data 126 stores, for example, an item name, a procurement destination name, a procurement lead time (procurement LT), a procurement lot, and a safety inventory coefficient as data fields.

FIG. 16 shows a configuration example of destination data. The destination data is data that describes the destination for each item. The destination data is used as the implementation condition when the scenario is implemented. The destination data stores, for example, an item name, a base name, a transportation means, and a transportation lead time (transportation LT) as data fields.

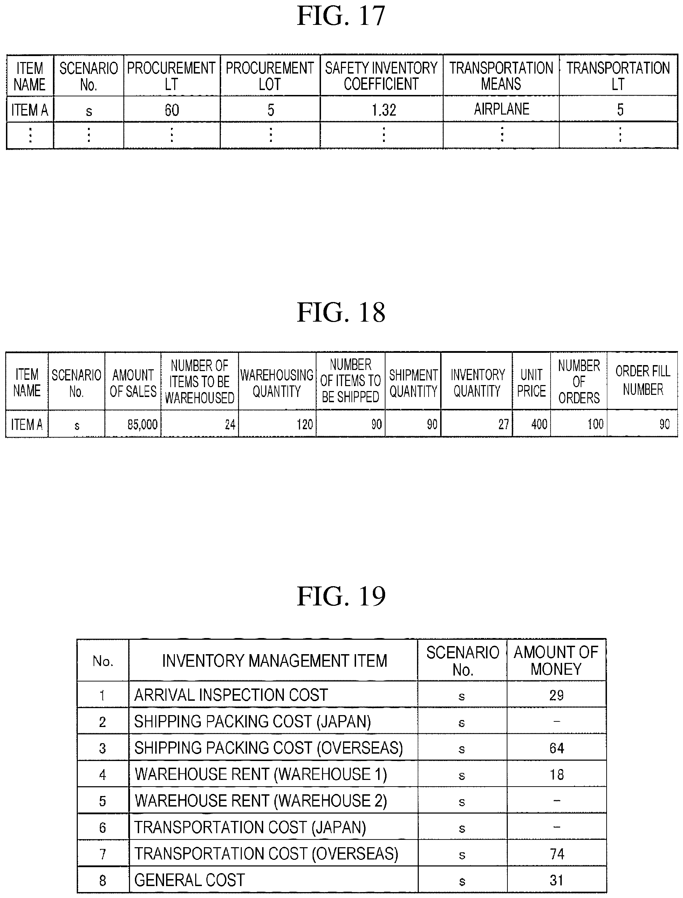

FIG. 17 shows a configuration example of scenario configuration data. The scenario configuration data is data that describes results such as the procurement lead time obtained when the scenario is implemented based on the procurement condition data 126 and the destination data. FIG. 17 shows an example for the scenario number "s". The scenario configuration data stores, for example, an item name, a scenario No., a procurement LT, a procurement lot, a safety inventory coefficient, a transportation means, and a transportation LT as data fields.

FIG. 18 shows a configuration example of warehousing and shipping forecast data. The warehousing and shipping forecast data is data that describes a warehousing and shipping prediction of the item obtained as a result of implementing the scenario. FIG. 18 shows an example for the scenario number "s". The warehousing and shipping forecast data stores, for example, an item name, a scenario No., an amount of sales, the number of items to be warehoused, the warehousing quantity, the number of items to be shipped, the shipment quantity, the inventory quantity, a unit price, the number of orders, and an order fill rate as data fields.

FIG. 19 shows a configuration example of inventory management cost forecast data. The inventory management cost forecast data is data that describes a prediction of the inventory management cost obtained as a result of implementing the scenario. FIG. 19 shows an example for the scenario number "s". The inventory management cost forecast data stores, for example, No., an inventory management item, a scenario No., and an amount of money as data fields.

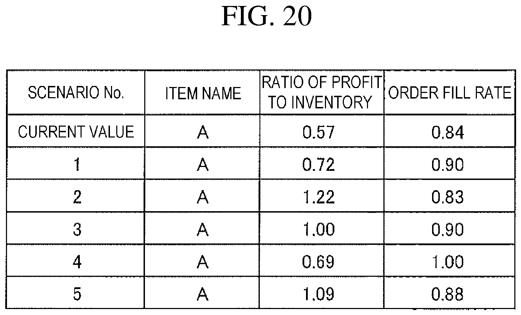

FIG. 20 shows a configuration example of scenario index assessment result data. The scenario index assessment result data is data that describes the same assessment index as in FIG. 9 for each scenario. The scenario index assessment result data stores, for example, a scenario No., an item name, a ratio of profit to inventory, and an order fill rate as data fields.

FIG. 21 is a flowchart illustrating a procedure in which the inventory assessment device 100 calculates the assessment index value of the scenario. Hereinafter, each step in FIG. 21 will be described in detail.

In step S2101, the inventory assessment device 100 acquires the master information (six pieces of data from the amount of money data 121 to the procurement condition data 126) from the database 400, and acquires data (FIG. 11: the measure content list to FIG. 13: the measure relevance data, and FIG. 16: the destination data) on the scenario.

In step S2102, the master change unit 114 creates the scenario change rate data (FIG. 14) by calculating a variation amount of each item in accordance with the measure relevance data. For example, according to the example of FIG. 12, a scenario 1 (s = 1) is a scenario in which a measure 3 (shortening a procurement period) is implemented at a level 1 in the item A. Further, according to the example of FIG. 13, the measure 3 has an influence of 1.1 times on a procurement price and an influence of 0.9 times on the procurement LT. The master change unit 114 also calculates influences of other measures and parameters in the same manner.

One scenario can implement a plurality of measures at the same time. In that case, influence degrees of the plurality of measures may overlap on a certain item. In this case, the change rate is calculated in consideration of a superimposed amount by multiplying or adding the influence degree for each item according to the measure content. The master change unit 114 performs the above processing for the influence items of all scenarios.

In step S2102, the master change unit 114 further creates the scenario configuration data and the warehousing and shipping forecast data by reflecting the scenario change rate data for the item actual data 124, the procurement condition data 126, and the destination data. For example, the warehousing and shipping forecast data can be generated by multiplying each item of the item actual data 124 by an influence of the scenario change rate data. Similarly, when these variations are calculated by multiplying the respective items of the procurement condition data 126 and the destination data by the influence of the scenario change rate data, the scenario configuration data can be obtained.

In step S2103, the warehousing and shipping processing unit 115 performs a warehousing and shipping calculation. The warehousing and shipping calculation is a processing of calculating an inventory variation by virtually warehousing and shipping items according to a planning cycle of an actual business. The warehousing and shipping processing unit 115 performs the warehousing and shipping calculation on a premise of the procurement lead time described in the scenario configuration data calculated in S2102. Therefore, it is possible to calculate a forecast such as warehousing and shipment in a scenario. A result of the warehousing and shipping calculation is stored in the warehousing and shipping forecast data (FIG. 18).

In step S2104, the affected amount calculation unit 116 calculates how the inventory management cost is affected as a result of a variation in the warehousing and shipment due to an influence of implementing the measures of the scenario. Specifically, first, a ratio of the items handled by the scenario in an actual result such as the warehousing and shipment described in the item actual data 124 is calculated. By multiplying a total inventory management cost by this ratio, the inventory management cost incurred in the scenario is calculated. Further, by multiplying the inventory management cost by the influence degree of each item given by the scenario change rate data, the variation amount of the inventory management cost in the scenario can be obtained. The affected amount calculation unit 116 stores the calculation result in the inventory management cost forecast data (FIG. 19). Whether the change rate based on the scenario change rate data affects the inventory management cost can be specified by the relevance data (FIG. 7).

For example, according to the example of FIG. 7, when the arrival inspection cost is recalculated, the increase and decrease of the warehousing quantity, the weight, and the volume are affected. In the example of the warehousing and shipping forecast data shown in FIG. 18, only the number of items to be warehoused varies from 25 to 24 when compared with the item actual data 124, and a ratio of the warehousing and shipping forecast to the actual result is 0.96. Therefore, 29, which is obtained by multiplying the arrival inspection cost 30 of the item A by 0.96, is a forecast value of the arrival inspection cost.

In step S2105, the scenario index calculation unit 117 calculates the assessment index for each scenario in accordance with the warehousing and shipping forecast data (FIG. 18) and the inventory management cost forecast data (FIG. 19). As the assessment index, the ratio of profit to inventory and the order fill rate can be used as in S1003. The scenario index calculation unit 117 stores the result in the scenario index assessment result data (FIG. 20). S2102 to S2105 are carried out for all scenarios.

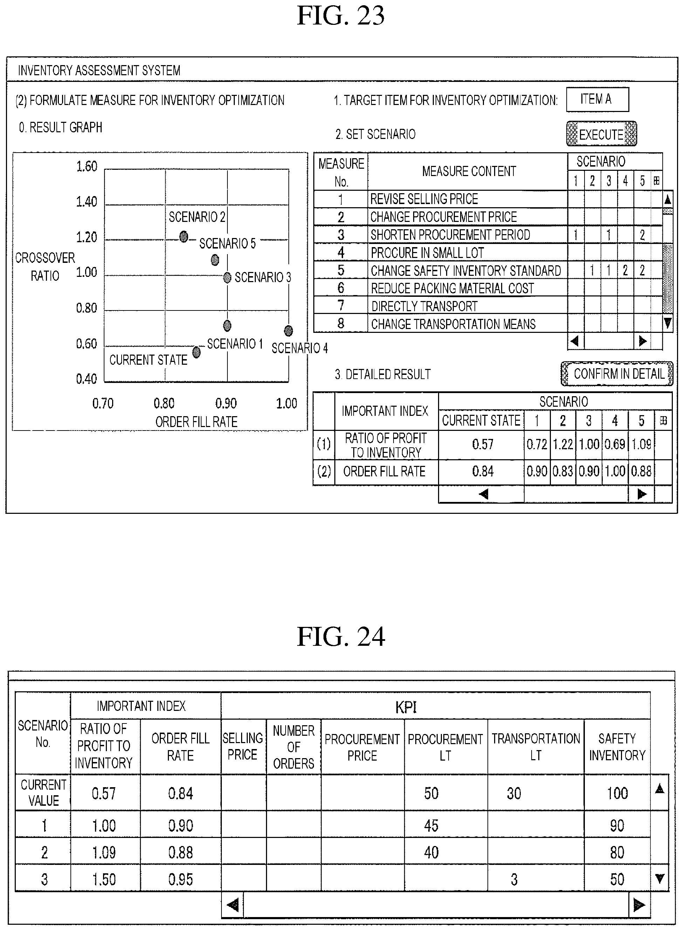

In step S2016, the scenario index calculation unit 117 displays an assessment index screen for each scenario to be described later with reference to FIGS. 23 to 24.

FIG. 22 is an example of the screen for displaying the calculation result by the index calculation unit 112. When the inventory management personnel presses an execution button on this screen, the inventory assessment device 100 performs the calculation procedure described in FIG. 10 to calculate the ratio of profit to inventory and the order fill rate as the assessment indexes for each item, and displays the result in a graph. The result graph can be represented by, for example, a scatter diagram in which a horizontal axis and a vertical axis represent the assessment indexes.

In this screen, the output unit 140 may transmit the calculation result by the index calculation unit 112 to the user terminal 300, and the user terminal 300 may display the calculation result as the screen of FIG. 22, or the output unit 140 itself may form this screen. In any case, a device that displays this screen displays this screen via a display device. The same applies to each screen to be described later.

FIG. 23 is an example of a screen for displaying a calculation result by a scenario index calculation unit 117. The inventory management personnel uses this screen to designate a target component for which inventory is to be optimized, and further sets a candidate measure for optimizing an inventory as a scenario. When the inventory management personnel presses the execution button, the inventory assessment device 100 calculates the assessment index for each scenario by executing the calculation procedure described in FIG. 21. The calculation result can be represented by a scatter diagram as in FIG. 22. By visualizing assessment results of a plurality of scenarios on two axes at the same time, it is possible to grasp which scenario and measure are effective. Therefore, even if the assessment index has a trade-off relationship and the best scenario cannot be determined immediately, it is possible to select a scenario that can be understood by the inventory manager.

FIG. 24 is a key performance indicator (KPI) confirmation screen. When a detailed confirmation button on an assessment result confirmation screen of FIG. 23 is pressed, this screen is displayed. In a process implementing the scenario by the master change unit 114 and the warehousing and shipping processing unit 115, the procurement lead time or the like is calculated. Among these parameters, items to be KPIs can be defined in advance, and each item obtained by implementing the scenario can be displayed as KPI in FIG. 24. This KPI can be said to be a parameter to be implemented in order to achieve the assessment index of each scenario. Therefore, the master change unit 114 and the warehousing and shipping processing unit 115 also have a role as a KPI calculation unit for calculating these KPIs.

### <First Embodiment: Summary>

In the inventory assessment device 100 according to the first embodiment, the inventory management cost calculation unit 111 calculates the sum of the inventory management costs for each combination of the occurrence cause items defined by the relevance data (FIG. 7), and calculates a ratio of the inventory management cost of each item to the sum. Therefore, the inventory management costs can be accurately calculated by reflecting an actual state of the causes of occurrence of the inventory management costs. By accurately calculating the inventory management costs, it is possible to accurately calculate the profit for each item and to formulate strategic inventory management in consideration of a profitability of each item.

In the inventory assessment device 100 according to the first embodiment, the inventory management cost calculation unit 111 allocates the inventory management cost to each item in accordance with the inventory management cost item for each item type defined by the gradient distribution data 123. The item type can be defined in accordance with a combination such as the transportation route described in the item characteristic data 122. Therefore, inventory management cost items that do not actually occur are no longer allocated to each item, so that the inventory management costs can be calculated accurately by reflecting the actual state such as the transportation route of the items.

In the inventory assessment device 100 according to the first embodiment, the index calculation unit 112 calculates the ratio of profit to inventory and the order fill rate as the assessment indexes of the items, and displays them on the screen illustrated in FIG. 22. Therefore, the inventory management personnel can appropriately assess a current state of inventory.

In the inventory assessment device 100 according to the first embodiment, the affected amount calculation unit 116 calculates parameters that are affected when the scenario is implemented and influence degrees thereof in accordance with the influence degree of each measure defined by the measure relevance data (FIG. 13), and calculates the variation amount of the inventory management cost using the result. The warehousing and shipping processing unit 115 creates the warehousing and shipping forecast data (FIG. 18) by using the parameters that vary in accordance with the measure relevance data. By these processings, it is possible to specify an effective measure for inventory optimization. In addition, the effect of the scenario can be calculated accurately by assessing the scenario using the calculation result of the inventory management cost that accurately reflects the actual state of the item.

In the inventory assessment device 100 according to the first embodiment, the scenario index calculation unit 117 calculates the assessment index for each scenario and displays the result on the screens of FIGS. 23 to 24. Therefore, the inventory manager can easily specify an effective scenario. In addition, by presenting a KPI value for each scenario, it is possible to easily grasp the parameters to be realized for inventory optimization and to optimize inventory more efficiently.

### <Second Embodiment>

In the first embodiment, the example in which the scenario is generated by combining the measures by the user has been described. In a second embodiment according to the invention, a configuration example in which a user sets a target value of an assessment index and the inventory assessment device 100 automatically generates a scenario for achieving the target value will be described.

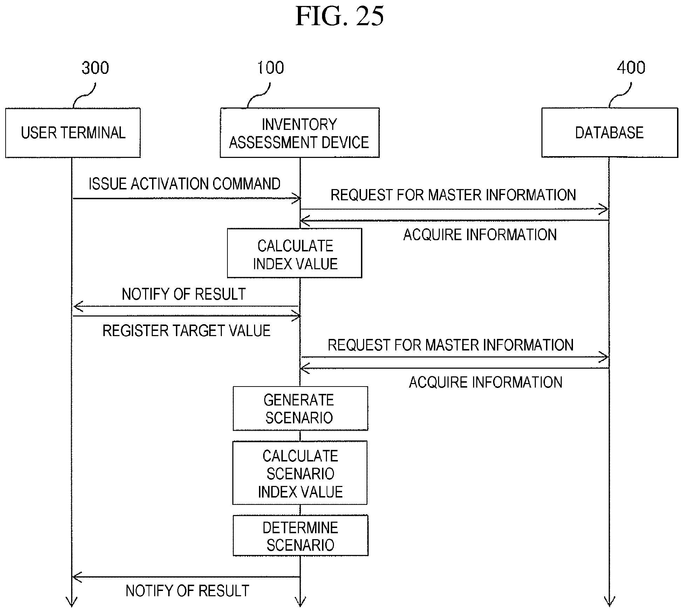

FIG. 25 is a sequence diagram when the user sets the target value of the assessment index and the inventory assessment device 100 formulates the scenario for achieving the target value. Hereinafter, each sequence in FIG. 25 will be described.

Processes from an activation command to the inventory assessment device 100 to a notification of an index value calculation result are the same as those in the first embodiment. An inventory management personnel uses the user terminal 300 to input target values of a ratio of profit to inventory and an order fill rate. The inventory assessment device 100 acquires each data in the same manner as in S2101. The inventory assessment device 100 generates a candidate of the scenario capable of achieving the target value according to the data, calculates the assessment index, and determines whether a target has been achieved. The inventory assessment device 100 notifies the user terminal 300 of the result. The inventory management personnel can confirm a scenario that conforms to the target values output to the user terminal 300, and can also confirm a KPI value to be improved as necessary.

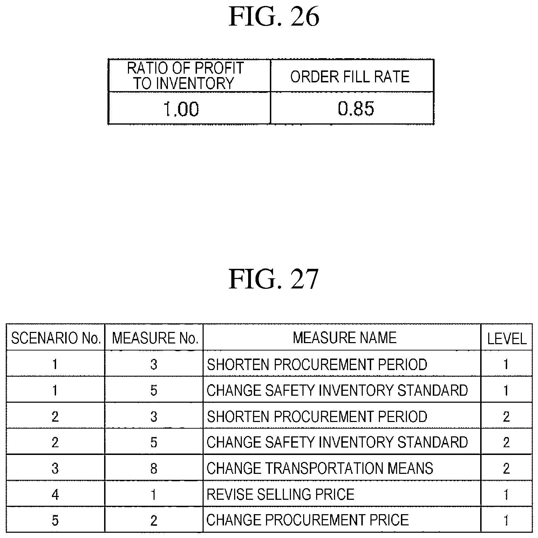

FIG. 26 shows a configuration example of an assessment index target value. The assessment index target value is set by the user as the target value of the assessment index described in the first embodiment, and stores, for example, the ratio of profit to inventory and the order fill rate.

FIG. 27 shows a configuration example of scenario candidate data. The scenario candidate data is data that describes the scenario generated by the scenario generation unit 113 as the candidate of the scenario capable of achieving the target value of the assessment index. The scenario candidate is formed of a combination of measures as in the scenario of the first embodiment. The scenario candidate data stores, for example, a scenario No., a measure No., a measure name, and a level as data fields.

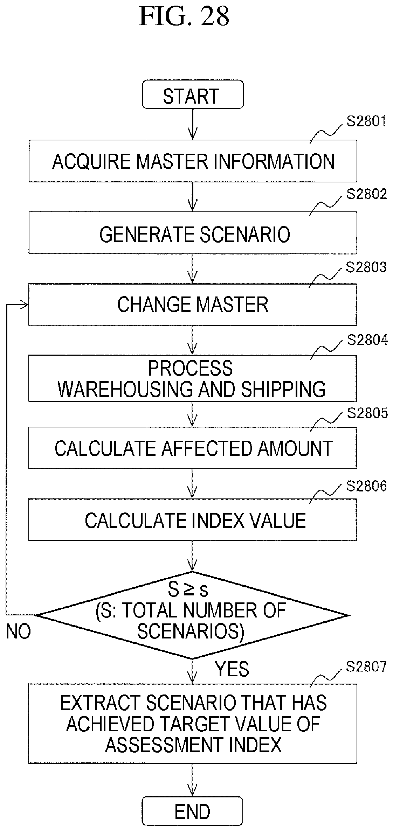

FIG. 28 is a flowchart illustrating a procedure in which the inventory assessment device 100 generates the scenario for achieving the target value of the assessment index. Hereinafter, each step in FIG. 28 will be described in detail.

Step S2801 is the same as S2101. However, in addition to S2101, the assessment index target value is also acquired. In step S2802, the scenario generation unit 113 automatically generates a scenario assumed from the measure content list (FIG. 11). As a scenario generation procedure, for example, if a measure content is n, a method for generating a scenario that covers all combinations of 2ⁿ can be considered.

In steps S2803 to S2806, the same processings as in S2102 to S2105 are performed for each scenario candidate generated by the scenario generation unit 113. In step S2807, the scenario determination unit 118 extracts a scenario that has achieved the target value. The scenario determination unit 118 leaves only the scenario that has achieved the target value in the scenario index assessment result data (FIG. 20), and deletes the unachieved scenario from the scenario index assessment result data. A target achievement scenario can be automatically extracted by the above procedure.

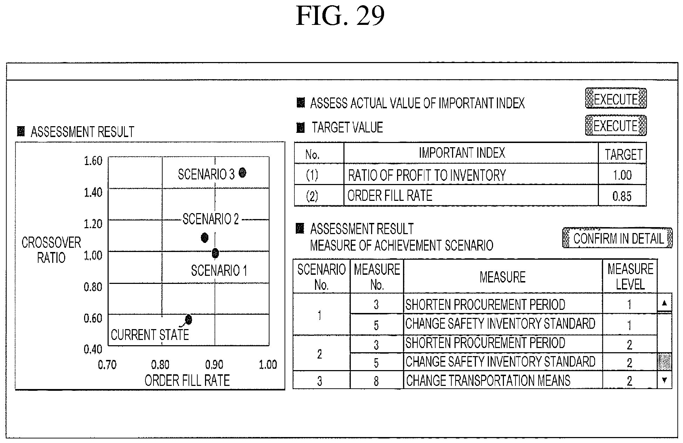

FIG. 29 is an example of a screen for displaying a calculation result by the scenario index calculation unit 117. In the second embodiment, this screen is displayed in addition to the screen of FIG. 22. When the user sets the target value on the screen and presses an execution button, the inventory assessment device 100 automatically generates the scenario and displays only a scenario that complies with the target value on the screen. The inventory management personnel can easily determine an effective measure for inventory optimization by confirming the assessment result on the screen. In addition, when a detailed confirmation button is pressed, a KPI confirmation screen of FIG. 24 is displayed, and it is possible to confirm a KPI value of the scenario that achieves the target value.

### <Second Embodiment: Summary>

In the inventory assessment device 100 according to the second embodiment, the scenario generation unit 113 generates the scenario candidate capable of achieving the target value of the assessment index set by the user, and the scenario index calculation unit 117 calculates the assessment index of each scenario. Further, the scenario determination unit 118 extracts the scenario that achieves the target value, and thus it is possible to automatically specify the measure that achieves the target value.

### <Modification of Invention>

The invention is not limited to the embodiments described above, and includes various modifications. For example, the embodiments described above have been described in detail for easily understanding the invention, and the invention is not necessarily limited to those including all the configurations described above. Further, a part of the configuration of one embodiment can be replaced with the configuration of another embodiment, and the configuration of another embodiment can be added to the configuration of one embodiment. In addition, a part of the configuration of each of the embodiments may be added to, deleted from, or replaced with another configuration.

In a sequence of FIG. 2, a scenario is registered after an index value is calculated, but the scenario may be registered at a time of an activation command of the inventory assessment device 100, or the scenario may be registered in the database 400 in advance. Therefore, it is possible to consistently and automatically process from the activation command to a result notification of a scenario index value.

In S1002, although an example in which all items described in relevance data of occurrence cause items are multiplied (warehousing quantity × weight × volume) has been described, a procedure of obtaining a sum for each combination of the occurrence cause items is not limited to this, and an appropriate calculation method according to an actual state, such as addition, a combination of addition and multiplication, weighted addition, or a combination thereof, can be used according to characteristics of the occurrence cause items.

Although it has been described that the calculation results are displayed on the screens in FIGS. 22 to 24 and 29, the method for outputting the calculation result is not limited to screen display, and for example, data that describes the calculation result may be output.

Although it has been described in the second embodiment that all combinations of measure contents are generated as scenario candidates, for example, when an amount of calculation is large, only some combinations may be generated as the scenario candidates. For example, it is conceivable to pick up only the measure content that is expected to be effective in advance, and generate the scenario candidates by all combinations of the measure contents. Alternatively, it is conceivable to assess only a part of the scenario candidates obtained by all combinations. In addition, it is conceivable to use only some level values instead of all level combinations. The number of scenario candidates may be limited by other appropriate methods.

Each of the above configurations, functions, processing units, and the like may be partially or entirely implemented by a hardware by, for example, designing the configurations, the functions, the processing units, and the like using an integrated circuit. Further, control lines or information lines indicate what is considered necessary for description, and the control lines or information lines are not all necessarily shown in a product. It may be considered that almost all the configurations are actually connected to each other. Technical elements of the above embodiments may be applied alone, or may be applied separately in a plurality of parts such as a program component and a hardware component. That is, the computation section 110 and each functional unit provided in the computation section 110 can be configured with hardware such as a circuit device that implements functions thereof, or can be configured by a central processing unit (CPU) executing software that implements the functions.

### Reference Sign List

10 inventory assessment system
100 inventory assessment device
110 computation section
111 inventory management cost calculation unit
112 index calculation unit
113 scenario generation unit
114 master change unit
115 warehousing and shipping processing unit
116 affected amount calculation unit
117 scenario index calculation unit
118 scenario determination unit
120 storage unit
121 amount of money data
122 item characteristic data
123 gradient distribution data
124 item actual data
125 relevance data
126 procurement condition data
127 measure assessment result data
130 input unit
140 output unit
200 network
300 user terminal
400 database

## Claims

1. An inventory assessment device that formulates a measure to optimize inventories of items, the inventory assessment device comprising:
a storage unit configured to store inventory management cost data that describes a list of cost items of inventory management costs; and
an inventory management cost calculation unit configured to calculate the inventory management costs of the items using the inventory management cost data, wherein
the storage unit further stores relevance data in which a combination of occurrence cause items that cause occurrence of the cost items is defined for each of the cost items,
the inventory management cost calculation unit calculates a total sum of the occurrence cause items for items having the same combination of the occurrence cause items, and
the inventory management cost calculation unit calculates a ratio of the cost items to be borne by the items by calculating a ratio of the occurrence cause items of the items in the total sum.

2. The inventory assessment device according to claim 1, wherein
the storage unit further stores distribution data that defines items for which the cost items are incurred, and the inventory management cost calculation unit reflects, as the inventory management cost, an actual operation state associated with inventory management of the items by calculating the total sum for each of the items having the same combination of the occurrence cause items among the items defined by the distribution data as the items for which the cost items are incurred.

3. The inventory assessment device according to claim 2, wherein
the storage unit further stores item characteristic data that defines a type of a transportation route for the item,
the distribution data defines whether the cost items are incurred for each type to which the item belongs, and
the inventory management cost calculation unit reflects, as the inventory management costs, an actual state of the cost item generated for each type by calculating the total sum for each item having the same type and the same combination of the occurrence cause items.

4. The inventory assessment device according to claim 1, further comprising:
an index calculation unit configured to calculate assessment indexes of the item, wherein
the index calculation unit calculates a ratio of profit to inventory of the item and an order fill rate of the inventory as the assessment indexes,
the index calculation unit calculates a ratio of a profit of the item to an inventory value of the item as the ratio of profit to inventory, and
the index calculation unit calculates the profit of the item by subtracting a cost of the item and the inventory management cost of the item from an amount of sales of the item.

5. The inventory assessment device according to claim 1, wherein
the relevance data defines at least one of the number of items to be warehoused, warehousing quantity, the number of items to be shipped, shipment quantity, inventory quantity, a weight, or a volume as the occurrence cause item for each cost item.

6. The inventory assessment device according to claim 3, wherein
the item characteristic data defines, as the type, at least one of a classification as to whether the item is transported from a procurement destination via a warehouse or is directly transported from the procurement destination to a transport destination without passing through the warehouse, the warehouse in which the item is stored, a classification as to whether a sales base of the item is in Japan or other countries, and a classification as to whether a procurement base of the item is Japan or other countries.

7. The inventory assessment device according to claim 1, wherein
the storage unit further stores measure relevance data that describes a measure that varies the inventory, parameters that are affected when the measure is implemented, and a correspondence between degrees of influences,
the inventory assessment device further comprises an affected amount calculation unit configured to calculate an amount of money of the inventory management cost affected when the measure is implemented, and
the affected amount calculation unit calculates the affected amount of money by calculating a variation amount of the inventory management cost using a result of calculating a warehousing and shipping forecast of the item in accordance with the correspondence described in the measure relevance data.

8. The inventory assessment device according to claim 7, wherein
the measure relevance data further describes a relationship between an implementation intensity of the measure and the degree of the influences as the correspondence, and
the affected amount calculation unit calculates a variation amount of the inventory management cost using the result of calculating the warehousing and shipping forecast of the item in accordance with the implementation intensity described in the measure relevance data.

9. The inventory assessment device according to claim 7, further comprising:
a warehousing and shipping processing unit configured to calculate the warehousing and shipping forecast, wherein
the warehousing and shipping processing unit reflects an amount of variation of the inventory when the measure is implemented on the warehousing and shipping forecast by calculating the warehousing and shipping forecast in accordance with the correspondence described in the measure relevance data.

10. The inventory assessment device according to claim 7, wherein
the storage unit stores measure list data that describes a list of the measures,
the inventory assessment device further comprises a scenario generation unit configured to generate a virtual scenario that implements a combination of one or more of the measures, and
the scenario generation unit generates the virtual scenario in accordance with an instruction input from a user who designates one or more of the measures described in the measure list data.

11. The inventory assessment device according to claim 10, wherein
the affected amount calculation unit calculates the affected amount of money for all the virtual scenarios generated by the scenario generation unit, and
the inventory assessment device further comprises an output unit configured to output comparison data for comparing calculation results for all the virtual scenarios calculated by the affected amount calculation unit.

12. The inventory assessment device according to claim 10 or 11, further comprising:
a scenario index calculation unit configured to calculate an assessment index of the virtual scenario, wherein
the scenario index calculation unit calculates, as the assessment indexes, a ratio of profit to inventory of the inventory achieved by the virtual scenario and an order fill rate of the inventory achieved by the virtual scenario,
the scenario index calculation unit calculates a ratio of a profit of the item to an inventory value of the item as the ratio of profit to inventory, and
the scenario index calculation unit calculates the profit of the item by subtracting the cost of the item and the inventory management cost of the item from the amount of sales of the item.

13. The inventory assessment device according to claim 12, further comprising:
a KPI calculation unit configured to calculate the parameters to be changed and an amount of change of the parameters as KPIs of the virtual scenario in order to achieve the assessment index of the virtual scenario calculated by the scenario index calculation unit; and
an output unit configured to output the KPIs.

14. The inventory assessment device according to claim 12, further comprising:
an input unit configured to receive an instruction input from a user who designates a target value of the assessment index of the virtual scenario, wherein
the scenario generation unit generates a candidate for the virtual scenario to be implemented in order to achieve the target value, and
the inventory assessment device further comprises a scenario determination unit configured to determine which of the virtual scenarios is capable of achieving the target value.

15. The inventory assessment device according to claim 14, wherein
the scenario generation unit generates a candidate of the virtual scenario by generating all combinations of the measures described in the measure list data.
